# EUROPÄISCHE PATENTANMELDUNG

(11) **EP 3 136 064 A1**
(43) Veröffentlichungstag der Anmeldung: **01.03.2017**
(21) Anmeldenummer: 16184597.9
(22) Anmeldetag: 17.08.2016
(51) Int. Cl.: G01F 23/24, G01M 3/04, G01K 7/02

(54) **WASSERSTANDSMELDER IN EINEM FERNWÄRMESYSTEM**

(30) Priorität: 24.08.2015 DE 102015011075
(71) Anmelder: Brandes GmbH, 23701 Eutin (DE)
(72) Erfinder: Knuth, Peter, 23715 Bosau-Hutzfeld (DE)
(74) Vertreter: Lobemeier, Martin Landolf

(57) **Zusammenfassung**

Wasserstandsmelder zum Erkennen des Eintritts von Wasser in einen Schacht eines Fernwärmesystems, mit einer unten offenen Hülse (10) aus einem elektrisch leitfähigen Material, einem von der Hülse (10) umgebenen, über deren offene untere Stirnseite hinausragenden, unten verschlossenen Hohlstab (12) aus einem elektrisch leitfähigen Material und einer von der Hülse (10) aufgenommenen, den elektrischen Widerstand zwischen Hülse (10) und Hohlstab (12) messenden Sensorik, gekennzeichnet durch einen in dem Hohlstab (12) gelagerten, bis an das untere Ende des Hohlstabs (12) geführten Temperaturfühler (16).

## Beschreibung

Die Erfindung betrifft einen Wasserstandsmelder zum Erkennen des Eintritts von Wasser in einen Schacht eines Fernwärmesystems, mit einer unten offenen Hülse aus einem elektrisch leitfähigen Material, einem von der Hülse umgebenen, über deren offene untere Stirnseite hinaus ragenden, unten verschlossenen Hohlstab aus einem elektrisch leitfähigen Material und einer von der Hülse aufgenommenen, den elektrischen Widerstand zwischen Hülse und Hohlstab messenden Sensorik.

Bei Fernwärmesystemen werden erforderliche Stellelemente regelmäßig in einem Schacht angeordnet, der den Zugang zu den Stellelementen ermöglicht. Dabei werden Wasserstandsmelder vorgesehen, die zum Erkennen des Eintritts von Wasser in den Schacht eingerichtet sind, wobei der Wasserstandsmelder an der Wandung des Schachts angeordnet ist.

Es ist nun erwünscht, nicht nur das Vorhandensein von in dem Schacht aufsteigendem Wasser zu erkennen, sondern auch zwischen in dem Schacht eindringenden Grund- oder Regenwasser einerseits und aus einer Leckstelle des Fernwärmesystems ausgetretenem Wasser andererseits zu differenzieren.

Erfindungsgemäß wird diese Aufgabe gelöst durch einen in dem Hohlstab gelagerten, bis an das untere Ende des Hohlstabs geführten Temperaturfühler.

Der Temperaturfühler ist vorzugsweise mittels einer wärmeleitfähigen Masse in dem Hohlstab eingebettet.

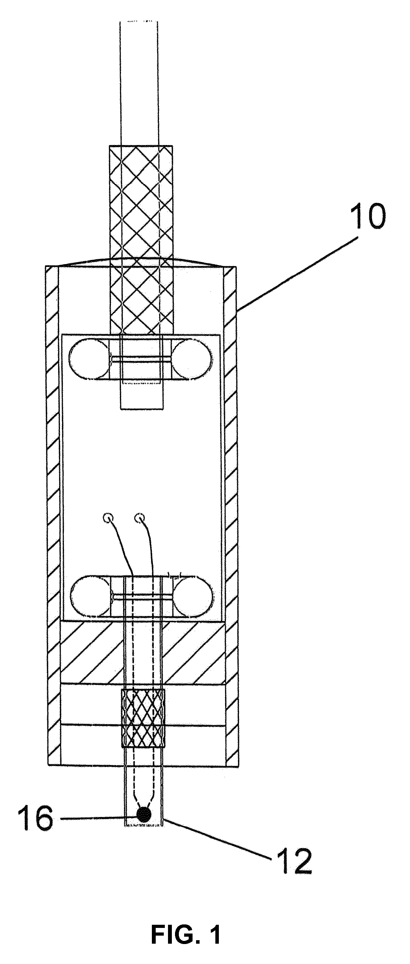

Die Erfindung wird im Folgenden anhand einer einzigen Zeichnung erläutert, die einen derartigen Wasserstandsmelder in einer Schnittdarstellung direkt wiedergibt.

Der Wasserstandsmelder besteht aus einer Hülse 10 aus einem elektrisch leitfähigen Material, die - bei Montage - unten offen ist. Die Hülse 10 nimmt eine Sensorik 14 auf, deren Messwerte über ein Kabel 18 nach außen geführt werden. Der Wasserstandsmelder weist einen Hohlstab 12 auf, der aus einem elektrisch leitfähigen Material besteht. Der Hohlstab 12 ragt über die untere offene Stirnseite der Hülse 10 hinaus, er ist unten verschlossen.

Die Sensorik ist einerseits mit der Hülse 10, andererseits mit der Wandung des Hohlstabs 12 verbunden und misst den elektrischen Widerstand zwischen Hülse 10 und Hohlstab 12, der in dem Moment schlagartig abnimmt, in dem das Wasser die untere Stirnseite der Hülse 10 erreicht.

In dem Hohlstab 12 ist ein Temperaturfühler 16 gelagert, der bis in die Nähe des unteren Endes des Hohlstabs 12 geführt ist. Der Temperaturfühler 16 ist vorzugsweise mittels einer wärmeleitfähigen Masse in dem Hohlstab 12 eingebettet.

Der Messfühler 16 wird von einer Elektronik gespeist und abgefragt.

Es ist weiter erkennbar, dass der Hohlstab 12 in seinem oberen freiliegenden Bereich von einem Schrumpfschlauch 20 umgeben wird, durch den dessen Isolation sichergestellt ist.

## Patentansprüche

1. Wasserstandsmelder zum Erkennen des Eintritts von Wasser in einen Schacht eines Fernwärmesystems, mit einer unten offenen Hülse (10) aus einem elektrisch leitfähigen Material, einem von der Hülse (10) umgebenen, über deren offene untere Stirnseite hinausragenden, unten verschlossenen Hohlstab (12) aus einem elektrisch leitfähigen Material und einer von der Hülse (10) aufgenommenen, den elektrischen Widerstand zwischen Hülse (10) und Hohlstab (12) messenden Sensorik, **gekennzeichnet durch**
einen in dem Hohlstab (12) gelagerten, bis an das untere Ende des Hohlstabs (12) geführten Temperaturfühler (16).

2. Wasserstandsmelder nach Anspruch 1, **dadurch gekennzeichnet, dass** der Temperaturfühler (16) mittels einer wärmeleitfähigen Masse in dem Hohlstab (12) eingebettet ist.
